# EUROPÄISCHE PATENTSCHRIFT

(11) **EP 2 090 881 B1**
(45) Veröffentlichungstag und Bekanntmachung des Hinweises auf die Patenterteilung: **03.10.2012**
(21) Anmeldenummer: 09001713.8
(22) Anmeldetag: 06.02.2009
(51) Int. Cl.: G01N 21/03, G01N 21/31, G01N 21/35

(54) **Optisches Analysegerät**
Optical analyser
Appareil d'analyse optique

(30) Priorität: 14.02.2008 DE 102008009100
(43) Veröffentlichungstag der Anmeldung: 19.08.2009
(73) Patentinhaber: GFG Gesellschaft für Gerätebau mbH, 44143 Dortmund (DE)
(72) Erfinder: Hübner, Hans-Jörg, Dipl.-Kfm., 44141 Dortmund (DE); Krage, Rainer, 58313 Herdecke (DE)
(74) Vertreter: Gesthuysen, von Rohr & Eggert

(56) Entgegenhaltungen:
- EP-A- 1 736 754
- WO-A-98/52020
- DE-C1- 19 713 928
- US-A1- 2003 002 044
- US-A1- 2004 007 667
- US-B1- 6 843 102

## Beschreibung

Die Erfindung betrifft ein optisches Analysegerät nach dem Prinzip der Strahlungsabsorption mit einem Gehäuse mit wenigstens einem strahlungsdurchlässigen Gehäuselement, mit wenigstens einer Strahlungsquelle und einem ihr zugeordneten Reflektor mit wenigstens einem ersten Detektor und einem zweiten Detektor sowie mit einem außerhalb des Gehäuses angeordneten externen Reflektor. Von dem externen Reflektor und dem strahlüngsdurchlässigen Gehäuseelement wird ein Absorptionsraum gebildet, wobei ein von der Strahlungsquelle und dem Reflektor emittierter Meßstrahl nach Reflektion an dem externen Reflektor wieder in das Gehäuse eintritt.

Gattungsgemäße Analysegeräte arbeiten nach dem Prinzip der Strahlungsabsorption von Materie, die von elektromagnetischer.Strahlung durchdrungen wird. Dabei handelt es sich um eine breitbandige Strahlung, die zumindest den Frequenzbereich abdeckt, in dem ein zu detektierender Stoff strahlungsabsorbierend wirkt. Dabei zeigt jeder zu erkennende Stoff ein charakteristisches Absorptionsspektrum. Die emittierende elektromagnetische Strahlung ist nach Durchlaufen des Absorptionsraumes, in dem sich der zu erkennende Stoff befindet, in bestimmen, zumeist engbandigen Absorptionsbereichen gegenüber der Strahlungsleistung benachbarter Frequenzbereiche relativ stark geschwächt. Über die Intensität der relativen Abschwächung im Absorptionsbereich ist es möglich, Aussagen über bestimmte Stoffkonzentrationen zu treffen, während über die Aufnahme eines Absorptionsspektrums vorhandene Stoffe identifiziert werden können.

Gattungsgemäße Analysegeräte werden besonders zur Messung toxischer und explosionsgefährdender Gase eingesetzt. Hierbei wird die für viele Gase charakteristische Absorption im infraroten Wellenlängenbereich genutzt. Diese Absorption von Gasen und Dämpfen ist sowohl hinsichtlich ihrer spektralen Verteilung, als auch hinsichtlich des Grades der Absorption sehr stoffspezifisch. Aus diesem Grunde kann die gasspezifische Absorption zur Identifizierung und Konzentrationsbestimmung genutzt werden. Hierzu findet die sog. nichtdispersive Infrarotanalyse (NDIR) Verwendung. Sie kommt ohne spektrale Zerlegung der emittierten elektromagnetischen Strahlung aus. Stattdessen wird mit selektiven Detektoren gearbeitet, die nur in einem begrenzten Strahlungsbereich sensitiv sind, nämlich in dem Bereich, in dem der zu erkennende Stoff strahlungsabsorbierend ist. Hierzu werden optische Filter mit schmalbandiger Transmission eingesetzt, um die Strahlung einer zunächst spektralbreitbandigen Lichtquelle so zu selektieren, dass sie mit der Absorption des zu messenden Gases übereinstimmt. Die Intensität der infraroten Strahlung wird dann mit pyroelektrischen Detektoren oder Thermosäulen erfaßt und von einer nachgeschalteten Elektronik, meist mit Microcontroller, ausgewertet.

Allerdings läßt sich bei Einsatz nur eines Detektors praktisch keine Aussage über die tatsächliche Konzentration eines zu detektierenden Stoffes treffen, da nicht auszuschließen ist, dass eine Schwächung des Meßstrahls auch auf anderen Ursachen beruhen kann, etwa auf Verschmutzungen im Absorptionsraum oder der Anwesenheit von Störgasen. Auch alterungsbedingte Intensitätsschwankungen der Strahlungsquelle lassen sich mit lediglich einem Detektor nicht erkennen. Deshalb ist es zur Kompensation der vorgenannten Effekte im Stand der Technik bekannt, zumindest zwei Detektoren zu verwendeln, von denen ein Detektor im Absorptionsbereich des zu detektierenden Stoffes empfindlich ist und der andere Detektor in einem Frequenzbereich empfindlich ist, in dem keine Absorption durch andere Stoffe möglich ist (Referenzdetektor und Meßdetektor). Bestimmte, die Messung verfälschende Effekte lassen sich dadurch kompensieren, dass das von dem Meßdetektor gewonnene Signal auf das von dem Referenzdetektor gewonnene Signal bezogen wird.

Derartige Dualwellenlängensysteme werden im industriellen Einsatz zum Personen- und Anlagenschutz vor toxischen und/oder explosiven Gasen und Dämpfen' benutzt. Häufig sind sie dabei in tragbare Geräte integriert, so dass ein Bedarf nach kleinen und energiesparenden Systemen besteht. Ebenso besteht häufig ein Bedürfnis, gleichzeitig mehrere optisch detektierbäre Gaskomponenten mit einem einzigen Gerätmessen zu können. Das gilt beispielsweise für die Überwachung der Explosionsgefahr durch Kohlenwasserstoffe und die gleichzeitige Messung von toxischem Kohlendioxid.

Im Stand der Technik bekannt ist es, zwei unabhängige Vorrichtungen in einem Gerät zu verwenden. So schlägt die DE 196 04 167 A1 eine Sensoreinrichtung zur Erfassung der Gaskonzentration vor, die mit mehreren selektiven Strahlungsdetektoren ausgestattet ist, welche kreisförmig in verschiedenen Abständen um eine breitbandige Strahlungsquelle angeordnet sind. Durch die kreisförmige Anordnung der Detektoren mit mehr oder weniger jeweils gradlinigen, ungefalteten Strahlungswegen ist die Anordnung relativ platzaufwendig und raumgreifend. Auf die Detektoren trifft jeweils nur ein kleiner Raumwinkelbereich der Strahlungsquelle. Dadurch sind energiereiche Strahler notwendig, um ein gutes Signal-/Rauschverhältnis zu erzielen.

Auch nach der KR 000190693063 BA ist ein Aufbau mit zwei Detektoren und unterschiedlich langen Strahlungswegen vorgeschlagen. Auch bei dieser Anordnung trifft nur ein geringer Teil der Strahlung auf die Detektoren auf, so dass ein hoher Energieverbrauch die Folge ist.

In der EP 1 736 754 A1 wird ein optisches Analysegerät beschrieben mit einem gasdichten Gehäuse mit mindestens einer ersten Strahlungsquelle und einem ihr zugeordneten ersten Reflektor und einer zweiten Strahlungsquelle und einem ihr zugeordneten zweiten Reflektor, mit mindestens einem ersten Detektor und einem zweiten Detektor sowie mit einem außerhalb des Gehäuses angeordneten externe Reflektor. Die Strahlungsquellen und die Detektoren sind innerhalb des Gehäuses angeordnet. Der Abstand A des externen Reflektors von dem Gehäuse bzw. von dem strahlungsdurchlässigen Gehäuseelement ist einstellbar. Dadurch kann das optische Analysegerät an unterschiedlich stark absorbierende Stoffe angepasst werden.

WO 98/52020 A1 offenbart ein optisches Analysegerät nach dem Prinzip der Strahlungsabsoiption, wobei der externe Reflektor wenigstens eine, den Messstrahl nicht reflektierende Ausnehmung aufweist und räumlich dahinter wenigstens ein dritter Detektor angeordnet ist.

Darüber hinaus besteht das Problem, dass nur schwach absorbierende Komponenten im Vergleich zu stark absorbierenden Komponenten eine längere Absorptionsstrecke benötigen, um bei gleicher Stoffkonzentration ein gleich starkes Signal zu erhalten. Je nach Messkomponente und zu detektierendem Konzentrationsbereich ergibt sich so stets eine ideale Kombination aus Messwellenlängenbereich und Absorptionsstrecke.

Hier setzt die vorliegende Erfindung an, indem der externe Reflektor wenigstens eine, den Messstrahl nicht reflektierende Ausnehmung aufweist und darin oder räumlich dahinter wenigstens ein dritter Detektor angeordnet ist. Hiermit wird erreicht, dass verschiedene Komponenten mit unterschiedlizehen Absorptionsstrecken bei optimierter Ausnutzung der Strahlungsintensität detektiert werden können. Es wird somit eine vielseitige, an verschiedene Messaufgaben anpassbare Vorrichtung geschaffen. Ein Teil der - vorteilhaft kollimierten - Strahlung trifft durch wenigstens eine Aussparung im externen Reflektor auf wenigstens einen dritten Detektor. Die übrige Strahlung wird am gekrümmten Spiegel reflektiert, und durchläuft den Absorptionsraum ein zweites Mal, zum dann auf wenigstens einen ersten und zweiten Detektor zu treffen. Dabei wird die Strahlungsintensität von den einzelnen Detektoren in unterschiedlichen Wellenlängenbereichen gemessen. Hierzu sind vor den Detektoren Interferenzfilter mit Bandpasscharakteristik angeordnet. Wenigstens ein Durchlassbereich der Interferenzfilter ist als Referenzkanal so ausgewählt, dass in diesem Bereich keine spektralselektive Absorption durch das zu detektierende Medium oder sonstige im Meßmedium enthaltene Komponenten erfolgt.

Wenigstens ein weiterer Durchlassbereich liegt hingegen als Meßkanal im spektralen Absorptionsbereich eines zu detektierenden Stoffes. Aus den Signalanteilen der Detektoren wird vorzugsweise durch Quotientenbildung der Meßwert gebildet, der ein Maß für die Konzentration des zu untersuchenden Stoffes darstellt.

Durch die Anordnung mehrerer Detektoren an beiden Enden des Absobtionsraumes ist der dritte oder weitere Detektor optimal für stark absorbierende Stoffe einzusetzen, während der zweite Detektor optimal für schwächer absorbierende Stoffe dient, da der Meßstrahl nach Auftreffen auf den externen Reflektor den Absorptionsraum ein zweites Mal durchlaufen muss, bevor er auf den zweiten Detektor auftrifft. Letzteres gilt auch für den ersten Detektor (Referenzdetektor).

Alternativ kann der dritte Detektor auch zur Detektion im hohen Konzentrationsbereich, hingegen der zweite Detektor zur Detektion im niedrigen Konzentrationsbereich des gleichen Stoffes eingesetzt werden. Ebenso kann anstelle des zweiten, dritten und eines weiteren Detektors auch jeweils ein Doppeldetektor eingesetzt werden.

Wahlweise kann an beiden Detektorpositionen ein Referenzkanal durch einen ersten Detektor eingesetzt werden. Bei niedriger Gefahr inhomogener Verschmutzung reicht nur ein Referenzkanal aus.

Vorteilhaft wird die von der Strahlungsquelle ausgehende Strahlung mittels des ihr zugeordneten Reflektors kollimiert. Hierzu ist der der Strahlungsquelle zugeordnete Reflektor als Spiegel so ausgebildet, dass die Strahlung auf den externen Reflektor und den dritten Detektor gelenkt wird. Dies kann beispielsweise durch eine parabolische Spiegeloberfläche erreicht werden, aber auch durch einen symmetrischen Konkavspiegel, insbesondere einen Sammel- oder Hohlspiegel.

Bei dem externen Reflektor ist die Spiegelfläche so geformt, dass ein möglichst hoher Anteil der auftreffenden Strahlung auf den ersten und zweiten Detektor gelenkt wird. Dies kann in einer einfachen Ausführung ein sphärischer Spiegel, insbesondere ein Kugelspiegel, zur Ausleuchtung eines kreissymmetrischen Detektors sein. Die Spiegel können so optimiert werden, dass sowohl die nur vom externen Reflektor reflektierten Strahlen als auch die von dem der Strahlungsquelle zugeordneten Reflektor und vom externen Reflektor reflektierten Strahlen die Detektoren gut ausleuchten.

Durch eine astigmatische Krümmung kann ein elliptisches Strahlprofil erzeugt werden, um z.B. zwei nebeneinander Detektoren auszuleuchten. Die Detektoren liegen dabei beispielsweise vor der primären Linienabbildung der einfach reflektierten Strahlen und hinter der primären Linienabbildung der mehrfach reflektierten Strahlen.

Um die Strahlung der Strahlungsquelle besser auszunutzen, kann die innere Wandung des Absorptionsraumes zusätzlich verspiegelt und so geformt sein, dass ein möglichst hoher Anteil der Strahlung mit wenigen Reflektionen auf den dritten Detektor trifft. Hierzu kann beispielsweise ein Teil der verspiegelten Wandung ebenfalls elliptisch geformt sein, wobei die Brennpunkte des Ellipsoids im Bereich der Strahlungsquelle und des dritten Detektors so liegen, dass ein möglichst großer Raumwinkel der Strahlung nach nur einer Reflektion von der Strahlungsquelle zum dritten Detektor gelangt.

Für den Einsatz in explosionsgefährdeter Umgebung kann das Analysengerät in verschiedenen Zündschutzarten ausgebildet sein. So kann die Strahlungsquelle beispielsweise mit einer Saphirscheibe druckfest im Sinne der Explosionsschutznormen zum Absorptionsraum hin montiert werden. Ebenso ist es möglich, die Strahlungsquelle in erhöhtem Sicherheitsstandard auszuführen. Insbesondere kann eine Ausführung der Strahlungsquelle in erhöhter Sicherheit "e" nach der IEC 60079-7 erfolgen. Als Infrarotstrahlungsquelle können insbesondere miniaturisierte Signallampen eingesetzt werden, diese werden als sonstige elektrische Betriebsmittel eingestuft und müssen den zutreffenden Bauanforderungen sinngemäß entsprechen. So kann die Strahlungsquelle beispielsweise eigensicher über mechanisch unbelastete, verlötete Anschlußdrähte von einer Leiterkarte versorgt werden. Die eigensichere Versorgungsspannung wird dabei so begrenzt, dass die maximal erreichbare Oberflächentemperatur des Glaskolbens die zulässigen Werte zur Vermeidung einer Zündung explosiver Gase unterschreitet.

Insbesondere ist die Strahlungsquelle in einem Metallgehäuse, insbesondere aus Edelstahl, mit einem Durchführungsverguß und formschlüssiger Saphirscheibe derartig angeordnet, dass auch bei einer Stoßprüfung mit beispielsweise 4 Joule Stoßenergie keine Beschädigung des Glaskolbens auftritt. Hierzu ist der Glaskolben so montiert, dass zur Saphirscheibe ein Abstand von wenigstens ca. 1 mm eingehalten wird. Die Strahlungsquelle wird dabei im Gehäuse mit elastischem, Stoßenergie absorbierendem Material, z.B. einem Silikonkleber, so fixiert, dass der Glaskörper keinen unmittelbaren Kontakt zu dem umgebenden Verguß bekommt.

Der übrige Aufbau des Gerätes kann so gestaltet werden, dass möglichst niedrige Diffusionszeiten für den Stoffaustausch im Absorptionsraum erzielt werden. Insbesondere kann der Absorptionsraum durch eine gasdurchlässige Membran ach vor Verschmutzung geschützt werden. Alternativ kann auch das Analysegerät insgesamt druckfest ausgelegt werden, beispielsweise kann der Absorptionsraum durch eine Flammendurchschlagsicherung, z.B. Sintermetall, ein entsprechendes Gehäuse und eine Vergußkapselung geschützt werden. Die konstruktiven Anforderungen an eine druckfeste Kapselung "d" ergeben sich aus der IEC 60079-1. Ebenso ist es möglich, zwei unabhängige Zündschutzarten redundant zur Erhöhung der Sicherheit und zur Ermöglichung des Einsatzes in Ex-Zone 0 zu kombinieren.

Als Detektoren können beispielsweise pyroelektrische oder thermophile Detektoren Verwendung finden. Zur Minimierung von Störungen in den Signalen ist es vorteilhaft, die Signalverstärkung möglichst nah bei den Detektoren vorzunehmen. Die Sensorelemente können hinsichtlich der Signalkennlinie, sowie Druck- und Temperaturabhängigkeiten charakterisiert werden, die entsprechenden Informationen können in einem dem jeweiligen Detektor zugehörigen elektronischen Speicher hinterlegt sein. Hierzu kann der jeweilige Detektor in einer bevorzugten Bauform mit zugehöriger Elektronik hergestellt werden, die sowohl Signälaufbereitüng als auch Signalverarbeitung und zusätzliche Sensorelemente für Temperatur, Feuchte und Druck enthält.

Die Erfindung ist nachstehend anhand der Zeichnung beispielhaft näher erläutert. Diese zeigt in:
- Fig. 1: einen Querschnitt durch ein erfindungsgemäßes optisches Analysegerät,
- Fig. 2: eine Aufsicht auf die Strahlungsquelle, den ihr zugeordneten Reflektor und den ersten und zweiten Detektor,
- Fig. 3: eine Aufsicht auf den externen Reflektor mit Aussparungen für einen dritten Doppeldetektor,
- Fig. 4: eine Aufsicht auf den externen Reflektor mit Aussparungen für einen dritten und vierten Detektor,

- Fig. 5: eine schematische Ansicht des Strahlengangs von der Strahlungsquelle über den externen Reflektor zum zweiten Detektor,
- Fig. 6: eine schematische Ansicht des Strahlengangs bei Verwendung eines astigmatisch gekrümmten, externen Reflektors,
- Fig. 7: eine schematische Ansicht des Strahlengangs bei Benutzung eines parabolisch geformte, der strahl lungsquelle zugeordneten Reflektors.

Ein allgemein mit 1 bezeichnetes optisches Analysegerät nach dem Prinzip der Strahlungsabsorption weist ein Gehäuse 2 mit wenigstens einem strahlungsdurchlässigen Gehäuseelement 3 sowie eine Strahlungsquelle 4 und einen ihr zugeordnetem Reflektor 5 sowie wenigstens einen ersten Detektor 6 und einen zweiten Detektor 7 und einen außerhalb des Gehäuses 2 angeordneten externen Reflektor 8 auf. Von dem strahlungsdurchlässigen Gehäuseelement 3 und dem externen Reflektor 8 sowie Seitenwandungen 17, 18 wird ein Absorptionsraum 9 gebildet. Ein von der Strahlungsquelle 4 und dem zugeordneten

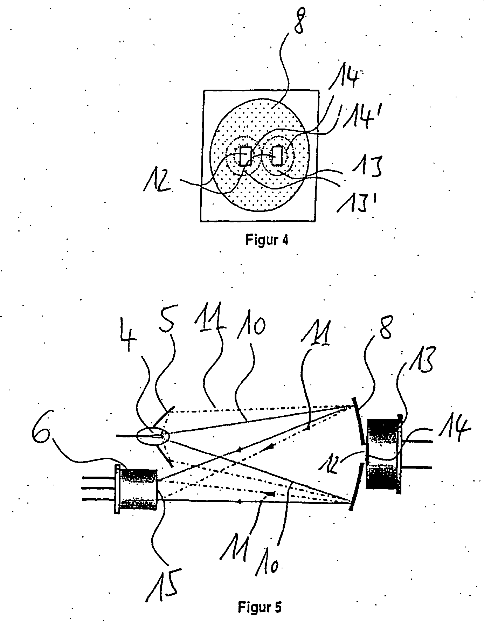

Reflektor 5 emmitierter Meßstrahl wird nach Reflektion an dem externen Reflektor 8 in das' Gehäuse 2 zurückgeworfen, wie mit dem Bezugszeichen 11 angedeutet ist, während ein nur von der Strahlungsquelle 4 ausgehender Meßstrahl 10 nicht von dem zugeordneten Reflektor 5 reflektiert wird, sondern nur von dem externen Reflektor 8 zurückgeworfen wird (punktiert dargestellt in Fig. 5). Der externe Reflektor 8 weit erfindungsgemäß wenigstens eine nicht reflektierende Ausnehmung 12 auf. Davor oder räumlich dahinter ist ein dritter Detektor 13 angeordnet. Dieser dritte Detektor 13 ist mit einem Interferenzfilter 14 ausgerüstet während der erste Detektor 6 und der zweite Detektor 7 ebenfalls mit Interferenzfiltern 15, 16 ausgestattet ist. Dabei ist der Durchlaßbereich des Interferenzfilters 15 vor dem ersten Detektor 6 so gewählt, dass in diesem Bereich keine spektralselektive

Absorption durch ein zu detektierendes Medium oder sonstige im Meßmedium enthaltene Komponenten erfolgt. Hingegen sind die Durchläßbereiche der Interferenzfilter 16 vor dem zweiten Detektor 7 und der Interferenzfilter 14, 14' vor dem dritten und ggf. vierten Detektor 13, 13' als Meßkanal im spektralen Absorptionsbereich eines nachzuweisenden Stoffes ausgebildet.

Aus den Signalanteilen der Detektoren 6; 7 und 13 sowie ggfs. 14 wird vorzugsweise durch Quotientenbildung der Meßwert gebildet, der ein Maß für die Konzentration des zu untersuchenden Stoffes darstellt.

Durch die Platzierung der Detektoren 7 und 13 an beiden Enden des Absorptionsraumes 9 ist der dritte Detektor 13 am besten für stark absorbierende Stoffe einzusetzen, während der zweite Detektor 7 optimal für schwächer absorbierende Stoffe ist. Alternativ kann auch der dritte Detektor 13 zur Detektion im hohen Konzentrationsbereich, dagegen der zweite Detektor 7 zur Detektion im niedrigen Konzentrationsbereich des gleichen Stoffes eingesetzt werden. Auch kann wahlweise an beiden Detektorpositionen, also auch innerhalb bzw. hinter dem externen Reflektor 8, ein Referenzkanal verwendet werden, oder nur ein erster Detektor 6 als Referenzkanal zur Detektion und Kompensation von Effekten, insbesondere bei niedriger Gefahr inhomogener Verschmutzungen.

Der der Strahlungsquelle 4 zugeordnete Reflektor 5 ist so ausgebildet, dass die Strahlung der Strahlungsquelle 4 auf den externen Reflektor 8 und den dritten Detektor 13 gelenkt wird. Dies kann beispielsweise durch eine parabolische Spiegeloberfläche erreicht werden.. Die Spiegelfläche des externen Reflektors 8 ist so geformt, dass ein möglichst hoher Anteil der auftreffenden Strahlung auf den zweiten Detektor 7 gelenkt wird. Dies, kann in einer einfachen Ausführung ein sphärischer Spiegel zur Ausleuchtung eines kreissymmetrischen Detektors sein.

Die Spiegel 5 und 8 können weiter dahingehend optimiert werden, dass sowohl die nur vom externen Reflektor 8 reflektierten Strahlen 11 (strichpunktiert dargestellt), als auch die von dem der Strahlungsquelle 4 zugeordneten Reflektor 5 und dem externen Reflektor 8 reflektierten Strahlen 10 (punktiert dargestellt) den ersten und zweiten Detektor 6 und 7 gut ausleuchten, wie in Figur 5 dargestellt.

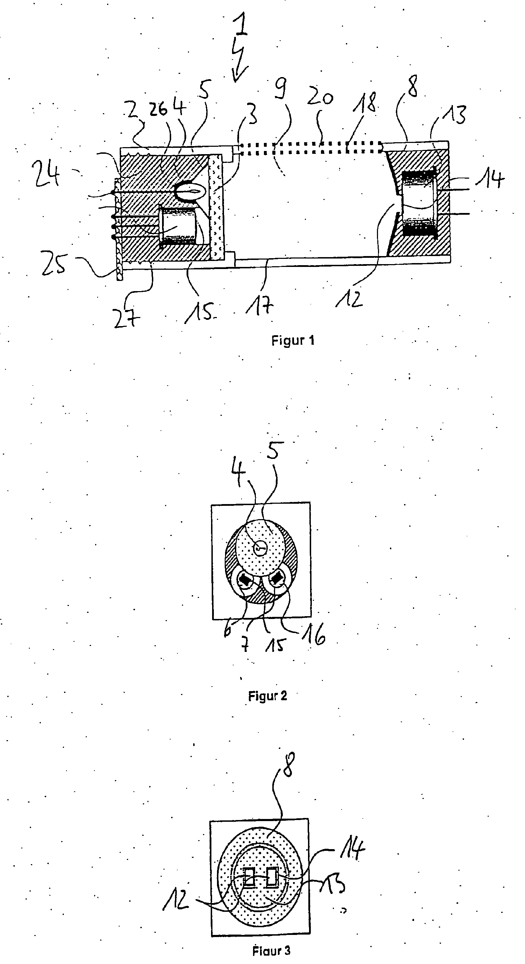

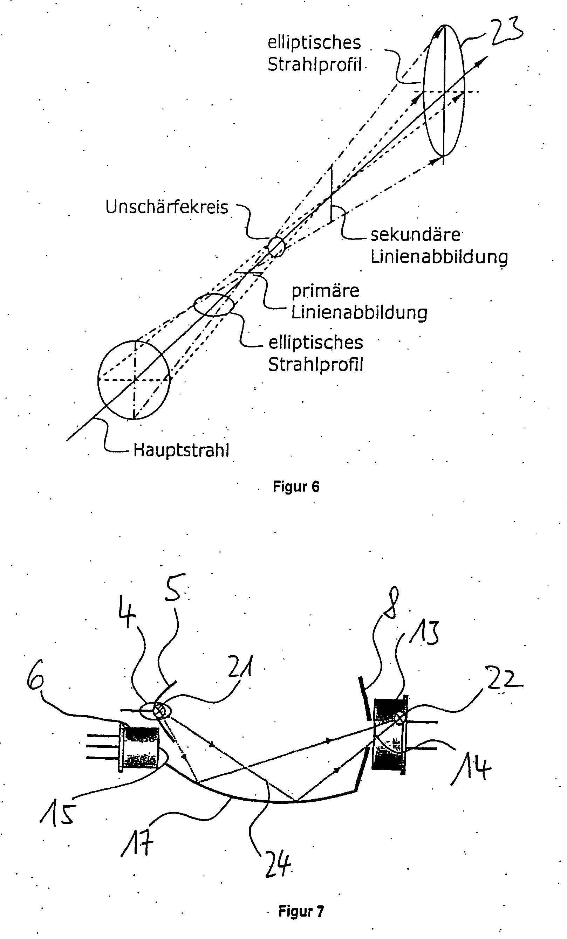

Durch eine astigmatische Krümmung kann ein elliptisches Strahlenprofil erzielt werden, um beispielsweise die beiden nebenein-anderliegenden Detektoren 6 und 7 auszuleuchten, wie in Figur 2 dargestellt. Die Detektoren 6 und 7 liegen dabei beispielsweise vor der primären Linienabbildung der einfach reflektierten Strahlen 10 und hinter der primären Linienabbildung der mehrfach reflektierten Strahlen 11, wie in Figur 6 dargestellt.

Um die Strahlungsquelle 4 optimal auszunutzen, kann die innere Wandung 17, 18 des Absorptionsraumes 9 zusätzlich verspiegelt und so geformt sein, dass ein möglichst hoher Anteil der Strahlung mit wenigen Reflektionen auf das dritte Detektorelement 13 trifft. Hierzu kann beispielsweise ein Teil der verspiegelten Wandung 17, 18 elliptisch geformt sein, wie in Figur 7 dargestellt. Dabei liegen die Brennpunkte 21, 22 des Ellipsoids 23 im Bereich der Strahlungsquelle 4 und des dritten Detektors 13 so, dass ein möglichst großer Raumwinkel der Strahlen 24 nach nur einer Reflektion an der verspiegelten Seitenwandung 17, 18 von der Strahlungsquelle 4 zum dritten Detektor 13 gelangt, wie in Figur 7 dargestellt.

Das strählungsdurchlässige Gehäuseelement 3, kann beispielsweise als Saphirscheibe ausgebildet sein, um die Strahlungsquelle 4 druckfest im Sinne der Explosionsschutznormen zu machen. Auch kann die Strahlungsquelle 4 in erhöhter Sicherheit ausgeführt sein. Hierzu wird die Strahlungsquelle 4 eigensicher über mechanisch unbelastete verlötete Anschlußdrähte 24 von einer Leiterkarte 25 versorgt. Die eigensichere Versorgungsspannung wird so begrenzt, dass die maximal erreichbare Oberflächentemperatur des Glaskolbens der Strahlungsquelle 4 die zulässigen Werte zur Vermeidung einer Zündung explosiver Gase unterschreitet. Die Strahlungsquelle 4 ist in einem Metallgehäuse 2 untergebracht, das z.B. aus Edelstahl bestehen kann, und einen Durchführungsverguß und eine als formschlüssige Saphirscheibe 27 ausgebildetes strahlungsdurchlässiges Gehäuseelement 3 aufweist. Zwischen dem Glaskolben der Strahlungsquelle 4 und der Saphirscheibe 3 wird dabei ein Abstand von wenigstens ca. 1 mm eingehalten, damit auch bei einer Stoßprüfung mit 4 Joule Stoßenergie keine Beschädigung des Glaskolbens auftritt. Die Strahlungsquelle 4 ist im Gehäuse mit elastischem, stoßenergieabsorbierendem Material, beispielsweise einem Silikonkleber 26, so fixiert, dass sie keinen unmittelbaren Kontakt zu dem umgebenden Verguß bekommt.

Der Absorptionsraum 9 selbst kann durch eine gasdurchlässige Membran 20 vor Verschmutzung geschützt werden. Im übrigen wird das Analysegerät 1 so gestaltet, dass möglichst niedrige Diffusionszeiten für den Stoffaustausch im Absorptionsraum 9 erzielt werden.

## Patentansprüche

1. Optisches Analysegerät (1) nach dem Prinzip der Strahlungsabsorption mit einem Gehäuse (2) mit wenigstens einem strahlungsdurchlässigen Gehäuseelement (3), mit wenigstens einer Strahlungsquelle (4) und einem ihr zugeordneten Reflektor (5), mit wenigstens einem ersten Detektor (6) und einem zweiten Detektor (7) sowie mit einem außerhalb des Gehäuses (2) angeordneten externen Reflektor (8), wobei von dem externen Reflektor (8) und dem strahlungsdurchlassigen Gehäuseelement (3) ein Absorptionsraum (9) gebildet wird, und ein von der Strahlungsquelle (4) und dem Reflektor (5) emittierter Meßstrahl (10) nach Reflektion an dem externen Reflektor (8) wieder in das Gehäuse (2) eintritt, **dadurch gekennzeichnet,**
**dass** der externe Reflektor (8) wenigstens eine, den Meßstrahl nicht reflektierende Ausnehmung (12) aufweist und darin oder räumlich dahinter wenigstens ein dritter Detektor (13) angeordnet ist.

2. Optisches Analysegerät nach Anspruch 1,
**dadurch gekennzeichnet,**
**dass** die von.der Strahlungsquelle (4) ausgehende Strahlung mittels des ihr zugeordneten Reflektors (5) kollimiert wird.

3. Optisches Analysegerät nach einem der Ansprüche 1 oder 2,
**dadurch gekennzeichnet,**
**dass** vor den Detektoren (6, 7, 13) Interferenzfilter (14, 15, 16) mit Bandpaßcharakteristik angeordnet sind.

4. Optisches Analysegerät nach einem der Ansprüche 1, 2 oder 3,
**dadurch gekennzeichnet,**
**dass** wenigstens ein Durchlaßbereich der Interferenzfilter (16) als Referenzkanal so gewählt ist, dass in diesem Bereich keine spektralselektive Absorption durch ein zu detektierendes Medium oder sonstige im Meßmedium enthaltene Komponenten erfolgt.

5. Optisches Analysegerät nach einem der Ansprüche 1 bis 4,
**dadurch gekennzeichnet,**
**dass** wenigstens ein Durchlaßbereich der Interferenzfilter (15, 16) als Meßkanal im spektralen Absorptionsbereich eines nachzuweisenden Stoffes liegt.

6. Optisches Analysegerät nach einem der Ansprüche 1 bis 5,
**dadurch gekennzeichnet,**
**dass** der der Strahlungsquelle (4) zugeordnete Reflektor (5) als symmetrischer Konkavspiegel, insbesondere als Sammel- oder Hohlspiegel ausgebildet ist.

7. Optisches Analysegerät nach einem der Ansprüche 1 bis 6,
**dadurch gekennzeichnet**,
das der erste (6) und zweite Detektor (7) innerhalb des Gehäuses (2) direkt angrenzend neben der Strahlungsquelle (4) dergestalt angeordnet sind, dass der von dem externen Reflektor (8) zurückgeworfene, gebündelte Meßstrahl (11) den Reflektor (5) der Strahlungsquelle (4) knapp passiert und direkt auf den ersten und zweiten Detektor (6, 7) auftrifft.

8. Optisches Analysegerät nach einem der Ansprüche 1 bis 7,
**dadurch gekennzeichnet,**
**dass** der externe Reflektor (8) als sphärischer Spiegel, insbesondere als Kugelspiegel ausgebildet ist.

9. Optisches Analysegerät nach einem der Ansprüche 1 bis 8,
**dadurch gekennzeichnet,**
**dass** der der Strahlungsquelle (4) zugeordnete Reflektor (5) als parabolischer Spielgel ausgebildet ist.

10. Optisches Analysegerät nach einem der Ansprüche 1 bis 9,
**dadurch gekennzeichnet,**
**dass** der externe Reflektor (8) derart ausgebildet ist, dass er einen elliptisch geformten Meßstrahl auf den ersten und zweiten Detektor (6, 7) zurückschickt, insbesondere dass er eine astigmatische Krümmung aufweist.

11. Optisches Analysegerät nach einem der Ansprüche 1 bis 10,
**dadurch gekennzeichnet,**
**dass** die inneren Wandungen (17, 18) des Absorptionsraums (9) zusätzlich verspiegelt und so geformt sind, dass ein möglichst hoher Strahlungsanteil mit wenigen Reflektionen auf den dritten Detektor (13) trifft.

12. Optisches Analysegerät nach einem der Ansprüche 1 oder 11,
**dadurch gekennzeichnet,**
**dass** zumindest ein Teil der inneren Wandungen (17, 18) elliptisch geformt ist.

13. Optisches Analysegerät nach einem der Ansprüche 1 bis 12,
**dadurch gekennzeichnet,**
**dass** die Strahlungsquelle (4) druckfest in dem Gehäuse (2) angeordnet ist, insbesondere durch Anordnung einer Saphir-scheibe (3) vor dem Absorptionsraum (9).

14. Optisches Analysegerät nach einem der Ansprüche 1 bis 13,
dadurch gekenntzeichnet,
dass die Strahlungsquelle (4) in erhöhter Sicherheit ausgeführt ist .

## Claims

1. Optical analysis device (1) according to the principle of radiation absorption, comprising a housing (2) with at least one radiation-permeable housing element (3), at least one radiation source (4) having a reflector (5) assigned to it, at least a first detector (6) and a second detector (7) as well as an external reflector located outside the housing (2), wherein an absorption space is formed by the external reflector (8) and the radiation-permeable housing element (3), and a measuring beam (10) emitted by the radiation source (4) and the reflector (5) returns to the housing (2) again after being reflected by the external reflector (8), **characterized in that** the external reflector (8) has at least one recess (12) that does not reflect the measuring beam and that a third detector (13) is arranged therein or spatially behind it.

2. Optical analysis device according to claim 1, **characterized in that** the radiation coming from the radiation source (4) is collimated by means of its assigned reflector (5).

3. Optical analysis device according to claim 1 or 2, **characterized in that** interference filters (14, 15, 16) having pass-band characteristics are arranged in front of the detectors (6, 7, 13).

4. Optical analysis device according to any one of claims 1, 2 or 3, **characterized in that** at least one pass-band area of the interference filter (16) is chosen as a reference channel so that there is no spectral-selective absorption in this area by means of a medium to be detected or other components contained in the measuring medium.

5. Optical analysis device according to any one of claims 1 to 4, **characterized in that** at least one pass-band area of the interference filter (15, 16) is located in the spectral absorption range of a material to be detected as a measuring channel.

6. Optical analysis device according to any one of claims 1 to 5, **characterized in that** the reflector (5) assigned to the radiation source (4) is designed as a symmetrical concave mirror, in particular as a concentrating reflector or curved mirror.

7. Optical analysis device according to any one of claims 1 to 6, **characterized in that** the first (6) and the second detector (7) are arranged within the housing (2) directly adjacent to the radiation source (4), that the focused measuring beam (11) reflected by the external reflector (8) just misses the reflector (5) of the radiation source (4) and directly reaches the first and second detectors (6, 7).

8. Optical analysis device according to any one of claims 1 to 7, **characterized in that** the external reflector (8) is designed as a spherical mirror, in particular as a globe mirror.

9. Optical analysis device according to any one of claims 1 to 8, **characterized in that** the reflector (5) assigned to the radiation source (4) is designed as a parabolic mirror.

10. Optical analysis device according to any one of claims 1 to 9, **characterized in that** the external reflector (8) is designed in such a manner that it returns an elliptically formed measuring beam to the first and second detectors (6, 7), in particular that it has an astigmatic curve.

11. Optical analysis device according to any one of claims 1 to 10, **characterized in that** the inner walls (17, 18) of the absorption space (9) are additionally mirrored and formed so that a large as possible radiation portion reaches the third detector (13) with little reflection.

12. Optical analysis device according to claim 1 or 11, **characterized in that** at least a part on the inner walls (17, 18) is elliptically shaped.

13. Optical analysis device according to any one of claims 1 to 12, **characterized in that** the radiation source (4) is arranged as to be pressure resistant in the housing (2), in particular by arranging a sapphire disc (3) in front of the absorption space (9).

14. Optical analysis device according to any one of claims 1 to 13, **characterized in that** the radiation source (4) occurs under increased safety.

## Revendications

1. Dispositif d'analyse optique (1) utilisant le principe de l'absorption du rayonnement, comportant un boîtier (2) comprenant au moins un élément de boîtier transparent au rayonnement (3), au moins une source de rayonnement (4) et un réflecteur qui lui est associé (5), au moins un premier détecteur (6) et un deuxième détecteur (7), ainsi qu'un réflecteur externe (8) disposé à l'extérieur du boîtier (2), dans lequel un espace d'absorption (9) est formé par le réflecteur externe (8) et l'élément de boîtier transparent au rayonnement (3), et dans lequel un faisceau de mesure (10) émis par la source de rayonnement (4) et le réflecteur (5), après réflexion sur le réflecteur externe (8), pénètre dans le boîtier (2), **caractérisé en ce que**
le réflecteur externe (8) comprend au moins un évidement (12) ne réfléchissant pas le faisceau de mesure et **en ce qu'**au moins un troisième détecteur (13) y est disposé ou est spatialement agencé derrière celui-ci.

2. Appareil d'analyse optique selon la revendication 1, **caractérisé en ce que** le rayonnement sortant de la source de rayonnement (4) par l'intermédiaire de son réflecteur associé (5) est collimaté.

3. Dispositif d'analyse optique selon l'une quelconque des revendications 1 ou 2, **caractérisé en ce que** des filtres d'interférence (14, 15, 16) ayant une caractéristique de bande passante sont disposés en amont des détecteurs (6, 7, 13).

4. Dispositif d'analyse optique selon l'une quelconque des revendications 1, 2 ou 3, **caractérisé en ce qu'**au moins une bande passante du filtre d'interférence (16) est sélectionnée en tant que canal de référence de telle sorte qu'il ne se produise dans cette zone aucune absorption spectralement sélective par un milieu devant être détecté ou dans des composants contenus dans le milieu de mesure.

5. Dispositif d'analyse optique selon l'une quelconque des revendications 1 à 4, **caractérisé en ce qu'**au moins une bande passante du filtre d'interférence (15, 16) se situe, en tant que canal de mesure, dans la région d'absorption spectrale d'une substance à détecter.

6. Dispositif d'analyse optique selon l'une quelconque des revendications 1 à 5, **caractérisé en ce que** le réflecteur (5) associé à la source de rayonnement (4) est conçu sous la forme d'un miroir concave symétrique, notamment d'un collecteur ou d'un miroir concave.

7. Dispositif d'analyse optique selon l'une quelconque des revendications 1 à 6, **caractérisé en ce que** les premier (6) et deuxième (7) détecteurs sont disposés dans le boîtier (2) de manière à être directement adjacents à la source de rayonnement (4), de telle sorte que le faisceau de mesure (11) groupé renvoyé par le réflecteur externe (8) passe exactement par le réflecteur (5) de la source de rayonnement (4) et soit directement incident sur les premier et deuxième détecteurs (6, 7).

8. Dispositif d'analyse optique selon l'une quelconque des revendications 1 à 7, **caractérisé en ce que** le réflecteur externe (8) est réalisé sous la forme d'un miroir sphérique, notamment d'un miroir de type boule.

9. Dispositif d'analyse optique selon l'une quelconque des revendications 1 à 8, **caractérisé en ce que** le réflecteur (5) associé à la source de rayonnement (4) est réalisé sous la forme d'un miroir parabolique.

10. Dispositif d'analyse optique selon l'une quelconque des revendications 1 à 9, **caractérisé en ce que** le réflecteur externe (8) est réalisé de telle sorte qu'il réfléchisse un faisceau de mesure elliptique sur les premier et deuxième détecteurs (6, 7), et **en ce qu'**il présente notamment une courbure astigmatique.

11. Dispositif d'analyse optique selon l'une quelconque des revendications 1 à 10, **caractérisé en ce que** les parois intérieures (17, 18) de l'espace d'absorption (9) sont en outre revêtues d'un revêtement réfléchissant et sont conformées de manière à ce que la proportion la plus élevée possible d'un rayonnement comportant peu de réflexions soit incidente sur le troisième détecteur (13).

12. Dispositif d'analyse optique selon l'une quelconque des revendications 1 ou 11, **caractérisé en ce qu'**au moins une partie des parois intérieures (17, 18) sont conformées de manière elliptique.

13. Dispositif d'analyse optique selon l'une quelconque des revendications 1 à 12, **caractérisé en ce que** la source de rayonnement (4) est disposée de manière étanche à la pression dans le boîtier (2), notamment par mis en place d'un disque de saphir (3) en amont du milieu d'absorption (9).

14. Dispositif d'analyse optique selon l'une quelconque des revendications 1 à 13, **caractérisé en ce que** la source de rayonnement (4) est réalisée de manière à présenter une sécurité plus élevée.
